Europäisches Patentamt

**European Patent Office**

Office européen des brevets

(19)

(11) Publication number: **0 028 442**
**A2**

(12)

# EUROPEAN PATENT APPLICATION

(21) Application number: 80302233.4

(22) Date of filing: 02.07.80

(51) Int. Cl.³: **G 21 C 19/06**

(30) Priority: 31.10.79 GB 7937677

(43) Date of publication of application:
13.05.81 Bulletin 81/19

(84) Designated Contracting States:
CH DE IT LI SE

(71) Applicant: THE ENGLISH ELECTRIC COMPANY LIMITED
1, Stanhope Gate
London W1A 1EH(GB)

(72) Inventor: Deacon, David
117 Lawford Road
Rugby Warwickshire(GB)

(74) Representative: Kirby, Harold Victor Albert
Central Patent Department The General Electric
Company Limited Hirst Research Centre East Lane
Wembley Middlesex HA9 7PP(GB)

(54) Storage arrangements for nuclear fuel elements.

(57) A storage arrangement for irradiated nuclear fuel elements (6) comprises an air-filled enclosure (1,2,3), an exhaust system for exhausting air from the enclosure through filters (13) to maintain the interior of the enclosure at sub-atmospheric pressure, and a transfer mechanism (7) for transferring fuel elements into and from the enclosure. By maintaining a depression within the enclosure any leakage will be into the enclosure so that the invention provides an inherently safer storage arrangement than the usual pond store.

EP 0 028 442 A2

COMPLETE DOCUMENT

./...

Croydon Printing Company Ltd.

FIG.1.

This invention relates to storage arrangements for irradiated fuel elements following their removal from nuclear reactors.

It is a common practice to store irradiated fuel elements under water, in what is generally known as pond stores, for periods that are long enough to allow the decay heat and radiation levels to reduce sufficiently to allow the fuel to be transported with safety. However the use of a pond store is not entirely satisfactory where the elements need to be stored for any considerable length of time.

Thus the ability to store the elements safely for protracted periods in a water environment is very dependent upon the materials of the cans in which the fuel is accommodated, the irradiation history of the fuel and/or the cans, the integrity of the cans, and the quality of the water in which the elements are stored. Thus cooling and shielding functions can be carried out completely satisfactorily whilst the fuel cans are intact, and whilst the water is present. However if a fuel can fails by corrosion or handling, then fission products can escape and both fission products and corrosion products are then able to float to the surface of the water, which could result in high dose rates to operators. In addition it is possible for these fission products and corrosion products to adhere to the walls of the pond, and variations in the pond water level, due to evaporation or leakage, could allow these products to dry out. They could then become airborne, causing possible ingestion hazards to operators and the risk of atmospheric pollution.

Moreover in order to maintain adequate cooling and shielding the pond integrity must be assured to very high limits. Small leaks could give rise to minor contamination problems, and larger leaks, resulting in loss of cooling water may result in a serious district hazard.

As safety requirements for nuclear installations become more rigorous, and the allowable dose rates to operators continue to decrease, the need to design storage systems and other nuclear installations to even higher orders of reliability becomes essential, particularly as for various reasons it is now becoming necessary to store irradiated nuclear fuel for longer periods than was originally anticipated.

An object of the present invention is to provide an alternative form of storage arrangement which substantially avoids the above-mentioned disadvantages.

According, therefore, to the invention a storage arrangement for irradiated nuclear fuel elements comprises an air-filled enclosure, an exhaust system for exhausting air from the enclosure through filters so as to maintain the interior of the enclosure at sub-atmospheric pressure, and a transfer mechanism for transferring fuel elements into and from the enclosure.

Maintaining a depression within the enclosure eliminates the need for a high integrity liner, as any leakage that occurs will be into the enclosure, and accordingly the invention provides an inherently safer store than the usual water filled pond. Moreover, as the fuel elements are stored in air rather than water, the risk of corrosion is reduced, and consequently the need for an operator to maintain the water chemistry at precise levels in order to prevent the generation of corrosion products and the possibility of atmospheric pollution is thereby avoided.

It will, of course, be understood that the walls of the enclosure should be of sufficient thickness to provide adequate radiation shielding, and the filters must also be of a kind suitable for preventing escape of radiation from the enclosure.

The enclosure conveniently houses a cooling system, incorporating one or more heat exchangers, for maintaining the temperature of fuel elements stored within the enclosure below a predetermined value. Preferably the enclosure has a plurality of heat exchangers spaced around the enclosure, and may also incorporate means for circulating air around the enclosure to enhance the cooling effect. Preferably also the capacity and disposition of the heat exchangers is such that the temperature of the fuel will not exceed safe limits, even when it is cooled by natural convection for example on failure of the air circulating means.

The heat exchangers employed in the cooling system may be of any suitable known kind, and the system may be designed to reject decay heat of the fuel either to the atmosphere or to any local water heat sink where this is available.

Preferably the exhaust system incorporates a plurality of outlets by which air can be extracted from the enclosure at a plurality of positions spaced around the enclosure. By this means the exhaust system can be designed to maintain a sub-atmospheric pressure within the enclosure and thus prevent an escape of air even in cases where a region of the wall becomes damaged to an extent which would otherwise result in a significant leakage problem.

The arrangement preferably also incorporates a plurality of monitors for detecting any rise in radiation levels at different positions within the enclosure, and also within the cooling and exhaust systems.

It is customary, after freshly irradiated fuel elements have been removed from a reactor, for the elements to be stored temporarily in an intermediate store, in order that the decay heat can be reduced to a suitably low level before they are transferred into the final store, and accordingly a transfer mechanism of a storage arrangement in accordance with the invention is conveniently arranged to perform the dual function of removing the elements from such an intermediate store and introducing them into the enclosure of the storage arrangement.

A storage arrangement in accordance with the invention can be used to effect the storage of fuel elements from different types of reactors both gas and liquid cooled, for example AGR's and PWR's, where pond storage has commonly been used to date.

One form of storage arrangement in accordance with the invention and a modification thereof will now be described by way of example with reference to Figures 1 to 3 of the accompanying schematic drawings, in which

Figure 1 represents diagrammatically and not to scale a cross-section through one store in accordance with the invention,

Figure 2 illustrates a plan view of the store, and

Figure 3 represents a cross-section through the modified store.

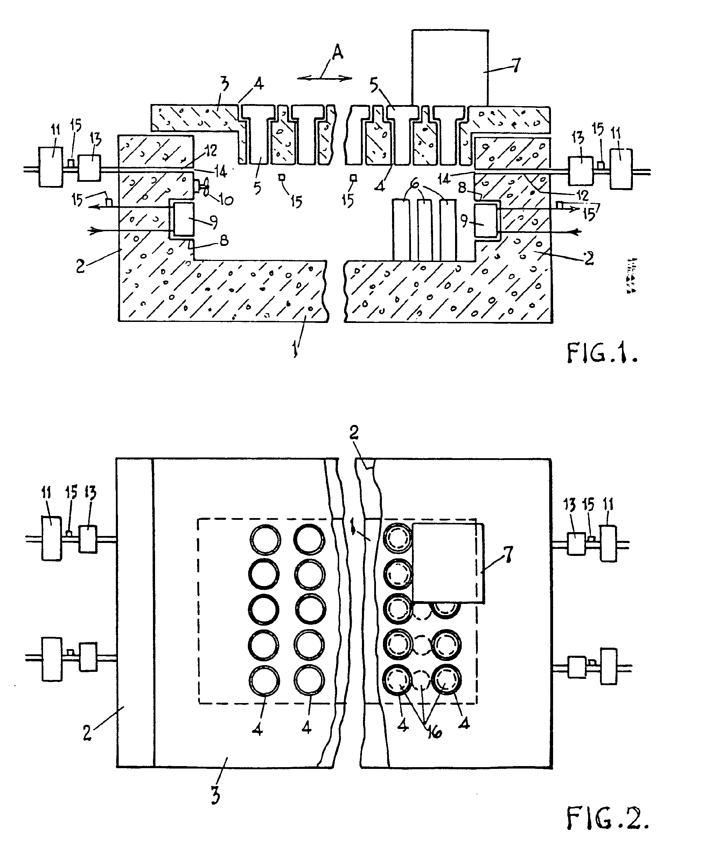

Referring first to Figure 1, the storage arrangement illustrated therein comprises an enclosure consisting of a base 1 and side-walls 2 surmounted by a cover 3, all of sufficient thickness to provide adequate radiation shielding, and formed, for example, of reinforced concrete.

The cover, which need not be sealed to the walls, is formed with a series of penetrations 4 closed by plugs 5 which can be removed to permit irradiated fuel elements or fuel element assemblies 6 to be introduced into the store or subsequently removed therefrom, the transfer of the elements or assemblies being effected by a movable transfer machine 7 of any convenient construction supported by the cover 3 or supported independently above it. The space above the cover 3 accommodating the transfer machine 7 will, in general, be enclosed by a surrounding structure, but as this is not material to the present invention it has not been illustrated.

Within recesses 8 spaced around the walls 2 of the enclosure there are located a series of heat exchangers 9 of any suitable form for cooling the air within the enclosure in order to maintain the temperature of the fuel elements at a suitably low value. One or more fans may also be provided as at 10 for circulating the air within the enclosure to enhance the cooling effect of the heat exchangers, although these are conveniently so disposed and are such that the temperature of the fuel does not exceed safe limits even when cooled by natural convection. The surplus heat can be rejected either to the atmosphere or to a suitable water heat sink depending upon the locality.

There are also provided a series of exhauster fans 11 spaced around the enclosure withdrawing air from the enclosure through ducts 12, and of sufficient capacity to maintain the air within the enclosure at sub-atmospheric pressure, the air passing to the fans through suitable filters 13.

By maintaining a depression within the enclosure the need for a high integrity sealed liner is avoided, as any leakage that occurs will be inwards. The number and capacity of the exhauster fans and heat exchangers are such as to provide adequate redundancy, to allow for breakdown and servicing, and by arranging a plurality of outlets 14 to the exhauster fans at spaced positions around the enclosure, a sub-atmospheric pressure may be maintained within the enclosure even in cases where a region of the wall becomes damaged to an extent which would otherwise give rise to significant leakage problems. It will also be seen that the plugs 5 do not need to seal the penetrations in the cover 4.

Monitors as at 15 are provided at suitable positions within the enclosure, and in association with each of the fan ducts and heat exchangers in order to detect any significant rise in the level of radiation.

One method of introducing the fuel elements into the enclosure is illustrated in diagrammatic form in Figure 2. This represents a plan view of the cover 3, which has a plurality of penetrations 4 disposed in a series of spaced rows and each closed by a respective plug 5. The spacing between adjacent rows is greater than that of the rows of fuel element storage positions 16 within the enclosure, but the spacing of penetrations in each row is equivalent to that of the storage positions; however the cover 3 is supported for sliding movement transverse to the rows as indicated by the arrow A to enable a penetration to be aligned with one of two or more associated storage positions. The transfer machine can then be located over any selected storage position in order to deposit a fuel element or fuel element assembly in, or remove it from, that storage position 16. By this means the number of penetrations in the cover can be reduced, compared with an arrangement in which an separate penetration is provided for each individual storage position, thus resulting in a stronger cover.

Although, in the example illustrated, the spacing between rows of penetrations is double that of the spacing of the rows of storage positions, such that each penetration may be positioned over either one of two storage positions, the spacing of the rows of penetrations may be three or more times that of the storage position rows, to enable a penetration to be located over three or more associated storage positions, the extent of sliding movement of the cover being made sufficient for this purpose.

In a modification the cover 3 may also be movable parallel to the direction of the rows so that a single penetration may be positioned over two or more storage positions in a row as well as over associated storage positions in two or more rows.

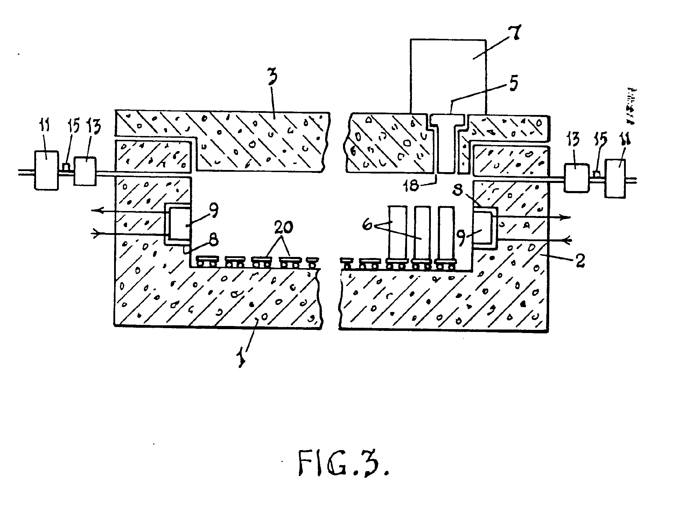

In a further modification as illustrated in Figure 3 instead of a plurality of penetrations the cover is shown to be provided with a single loading/ unloading opening 18 only, the enclosure then incorporating conveyor means 19 having a plurality of carriers 20 on or into which the fuel elements or fuel element assemblies 6 can be deposited, the carriers 20 being selectably movable to a position beneath the opening 18 to permit fuel elements or fuel element assemblies to be loaded into or removed from them as may be desired.

Other means of introducing fuel elements or fuel element assemblies into or removing them from the enclosure could alternatively be employed, and means may be provided for effecting the transfer of the elements or assemblies through one of the side walls instead of through a top cover.

It will accordingly be understood that the precise form of the enclosure, and the particular method of fuel transfer are not relevant to the present invention, and alternative constructions of enclosure and fuel transfer arrangements may be employed.

CLAIMS

1.    A storage arrangement for irradiated nuclear fuel elements comprising an air-filled enclosure, an exhaust system for exhausting air from the enclosure through filters so as to maintain the interior of the enclosure at sub-atmospheric pressure, and a transfer mechanism for transferring fuel elements into and from the enclosure.

2.    A storage arrangement according to Claim 1 wherein the enclosure houses a cooling system, incorporating one or more heat exchangers, for maintaining the temperature of fuel elements stored within the enclosure below a predetermined value.

3.    A storage arrangement according to Claim 2 wherein the enclosure contains a plurality of heat exchangers spaced around it, and incorporates means for circulating air around the enclosure to enhance the cooling effect.

4.    A storage arrangement according to Claim 3 wherein capacity and disposition of the heat exchangers is such that the temperature of the fuel remains within safe limits, when it is cooled by natural convection on failure of the air circulating means.

5.    A storage arrangement according to any preceding claim wherein the exhaust system incorporates a plurality of outlets by which air can be extracted from the enclosure at a plurality of positions spaced around the enclosure.

6.    A storage arrangement according to any preceding Claim incorporating a plurality of monitors for detecting any rise in radiation levels at different positions within the enclosure, and also within the cooling and exhaust systems.

7.    A storage arrangement according to any preceding claim incorporating an intermediate store for temporary storage of fuel elements removed from an associated reactor before transfer to said enclosure, wherein the said transfer mechanism is arranged to perform the dual function of removing fuel elements from the intermediate store and introducing them into said enclosure.

8.      A storage arrangement according to any preceding claim wherein the enclosure has fixed side walls and a cover supported for sliding movement on said walls, the cover having a series of penetrations less than the number of fuel element positions within the enclosure, each of which penetrations is normally closed by a plug, and the degree of movement of the cover and the positions of the penetrations being such that the cover is movable to a position in which a penetration is immediately above a selected fuel element position, to allow a fuel element to be placed in or removed from that position by the transfer mechanism, following the removal of the respective plug.

9.      A storage arrangement according to any one of Claims 1 to 7 wherein the enclosure has a cover fixed relative to the side walls, the cover having at least one penetration normally closed by a plug, and the enclosure having within it a plurality of carriers on or into which the fuel elements can be deposited, which carriers are selectively movable to a position beneath a or the said penetration, to allow a fuel element to be loaded into or removed from an appropriately located carrier following removal of the plug from the penetration.

10.      A storage arrangement for irradiated fuel substantially as shown in and as hereinbefore described with reference to Figures 1 and 2 or Figure 3 of the accompanying drawings.

112

FIG.1.

FIG.2.

FIG.3.